# FASCICULE DE BREVET EUROPEEN

(11) **EP 2 588 426 B1**
(45) Date de publication et mention de la délivrance du brevet: **12.07.2023**
(21) Numéro de dépôt: 11738765.4
(22) Date de dépôt: 29.06.2011
(51) Int. Cl.: C03C 10/12, C03C 17/00, F24C 15/10

(54) **DISPOSITIF DE CUISSON**
KOCHVORRICHTUNG
COOKING DEVICE

(30) Priorité: 30.06.2010 FR 1002747
(43) Date de publication de la demande: 08.05.2013
(73) Titulaire: Eurokera S.N.C., 77640 Jouarre (FR)
(72) Inventeur: DI GIOVANNI, Albert, F-94130 Nogent Sur Marne (FR); COMTE, Marie, F-92260 Fontenay Aux Roses (FR); BRUNET, Edouard, F-75012 Paris (FR); MELSCOËT-CHAUVEL, Isabelle, F-77590 Bois Le Roi (FR)
(74) Mandataire: Saint-Gobain Recherche
(86) Numéro de dépôt international: PCT/FR2011/051511
(87) Numéro de publication internationale: WO 2012/001300

(56) Documents cités:
- EP-A1- 1 170 264
- EP-A1- 1 867 613
- EP-A1- 2 724 995
- EP-A2- 1 465 460
- WO-A2-2010/136731
- WO-A2-2010/137000
- DE-A1-102009 013 127
- FR-A1- 2 868 066
- FR-A1- 2 887 870
- FR-A1- 2 902 421
- JP-A- 2006 125 645

## Description

L'invention concerne le domaine des dispositifs de cuisson.

Elle s'intéresse plus particulièrement à des dispositifs de cuisson comprenant des éléments internes parmi lesquels au moins un moyen de chauffage, des moyens de commande et/ou de contrôle et au moins un dispositif émettant de la lumière, lesdits éléments internes étant recouverts par au moins une plaque en verre ou en vitrocéramique colorée à l'aide d'oxyde de vanadium.

Ces dispositifs de cuisson, parfois appelés « tables de cuisson », sont appréciés notamment pour leurs qualités esthétiques. Ces dispositifs sont souvent encastrés dans un plan de travail ou montés sur des cuisinières, si bien que le seul élément visible par l'utilisateur est la plaque en verre ou vitrocéramique. Cette plaque dissimule le reste du dispositif, dont les éléments internes : moyens de chauffage, par exemple par induction (inducteurs) ou rayonnement (foyers halogènes ou radiants), cablage électrique, cartes électroniques destinées à piloter les moyens de commande, de contrôle ou d'affichage, caisson (généralement en tôle), isolants thermiques, dispositifs d'affichage, moyens de fixation mécanique, thermolimiteurs... Parmi ces éléments internes, la plupart doivent être masqués par la plaque, tandis que certains doivent être visibles lorsqu'ils sont en état de fonctionnement. C'est le cas notamment des moyens de chauffage par rayonnement, qui en état de marche émettent un rayonnement visible devant, pour des raisons de sécurité, être perçu par l'utilisateur. C'est également le cas pour les dispositifs d'affichage émettant de la lumière (par exemple à base de diodes électroluminescentes), qui ne doivent pas être visibles en tant que tels, mais dont la lumière émise doit pouvoir être visualisée par l'utilisateur. Ces dispositifs sont en effet destinés à mettre à disposition de l'utilisateur toute une série d'informations utiles : niveaux de puissance des moyens de chauffage, identification des zones de la plaque dépassant un niveau donné de température etc...

Pour résoudre ce problème, des solutions ont été apportées qui consistent à utiliser des plaques en verre ou en vitrocéramique colorée à l'aide d'oxyde de vanadium, le plus souvent en ce dernier matériau, qui dissimulent les éléments internes par absorption de la plus grande partie du rayonnement visible. Ces plaques, très sombres, possèdent une transmission lumineuse (intégrée dans tout le spectre visible) très faible, de l'ordre du pourcent, mais possèdent une transmission dans le rouge plus élevée, si bien que la lumière rouge émise par les foyers radiants ou halogènes est visible par l'utilisateur lorsqu'ils sont en fonctionnement. De même, ces plaques permettent de percevoir les informations véhiculées par des diodes électroluminescentes émettant dans le rouge.

De telles plaques bloquent toutefois la quasi-totalité du rayonnement associé aux autres couleurs : la lumière émise par des diodes électroluminescentes bleues est notamment totalement invisible ou à peine perceptible au travers de telles plaques.

La demande WO 2010/040443 propose pour résoudre ce dernier problème une plaque dont la transmission intégrée dans le domaine du visible (transmission lumineuse) est d'au plus 2,5%, mais dont la transmission optique à 450 nm et plus est d'au moins 0,1%. Des transmissions allant de 0,1 à 0,38% pour une longueur d'onde de 450 nm sont ainsi décrites.

Cette solution n'est toutefois pas dénuée d'inconvénients, car à ce faible niveau de transmission à 450 nm, la lumière bleue ne sera bien perçue que si l'intensité lumineuse du dispositif émettant de la lumière est élevée, ce qui, par exemple dans le cas des diodes électroluminescentes, nécessite d'utiliser des puissances d'alimentation électriques élevées, notamment par le biais d'une augmentation de l'intensité du courant d'alimentation. L'adaptation de puissance nécessaire entraîne alors une modification des circuits de commande des dispositifs de cuisson. Les faibles luminosités entraînent également une plus grande sensibilité à l'environnement lumineux : en cas d'éclairage extérieur important, les diodes électroluminescentes bleues ne sont pas suffisamment visibles par l'utilisateur.

La demande EP-A-1 465 460 propose quant à elle des vitrocéramiques dont la transmission lumineuse Y, intégrée sur tout le spectre du visible, est supérieure ou égale à 2,5%, et peut aller jusqu'à 15%, pour une épaisseur de 3 mm. Jouer sur la seule transmission intégrée est toutefois insuffisant : pour les transmissions les plus faibles, la lumière bleue n'est convenablement perçue que si l'intensité lumineuse du dispositif émettant de la lumière est élevée, tandis que les transmissions plus élevées entraînent une trop grande visibilité des éléments internes du dispositif de cuisson.

L'invention a pour but de résoudre ces différents problèmes. A cet effet l'invention a pour objet un dispositif de cuisson comprenant des éléments internes parmi lesquels au moins un moyen de chauffage, des moyens de commande et/ou de contrôle et au moins un dispositif émettant de la lumière, lesdits éléments internes étant recouverts par au moins une plaque en vitrocéramique colorée à l'aide d'oxyde de vanadium, au moins un dispositif émettant de la lumière n'étant pas de couleur rouge vu au travers de ladite plaque, ladite plaque ayant de manière intrinsèque une transmission lumineuse allant de 2,3% à 40% et une transmission optique d'au moins 0,6% pour au moins une longueur d'onde comprise dans le domaine allant de 420 à 480 nm, ledit dispositif de cuisson étant tel que l'on dispose au-dessus, en dessous ou au sein de ladite plaque au moins un moyen de masquage destiné à masquer au moins une partie desdits éléments internes.

Par l'expression « ladite plaque ayant de manière intrinsèque une transmission lumineuse allant de 2,3% à 40% », on entend que la plaque possède une telle transmission lumineuse en elle-même, sans la présence d'un quelconque revêtement. La transmission lumineuse est telle que définie par la norme ISO 9050 :2003.

On entend par transmission la transmission totale, tenant compte à la fois de la transmission directe et de l'éventuelle transmission diffuse. Pour la mesurer, on utilise donc de préférence un spectrophotomètre muni d'une sphère intégrante. Dans le cas d'une plaque vitrocéramique possédant des reliefs périodiques (notamment des picots) sur au moins une face, l'épaisseur de la plaque prend en compte ces reliefs.

Un, le ou chaque moyen de chauffage est de préférence choisi parmi les moyens de chauffage par induction et les moyens de chauffage par rayonnement. Il peut s'agir à titre d'exemple d'inducteurs, de foyers radiants ou halogènes. Il est possible de combiner différents moyens de chauffage au sein d'un même dispositif de cuisson.

Un, le ou chaque dispositif émettant de la lumière est avantageusement choisi parmi les diodes électroluminescentes (par exemple faisant partie d'afficheurs à 7 segments), les afficheurs à cristaux liquides (LCD), à diodes électroluminescentes, éventuellement organiques (OLED), les afficheurs fluorescents (VFD). Les couleurs vues au travers de la plaque sont diverses : rouge, vert, bleu, et toutes les combinaisons possibles, dont le jaune, le violet, le blanc... Ces dispositifs émettant de la lumière peuvent être purement décoratifs, par exemple séparer visuellement différentes zones de la plaque. Le plus souvent toutefois ils auront un rôle fonctionnel en affichant diverses informations utiles pour l'utilisateur, notamment indication de la puissance de chauffe, de la température, de programmes de cuisson, de temps de cuisson, de zones de la plaque dépassant une température prédéterminée.

Les dispositifs de commande et de contrôle comprennent généralement des touches sensitives, par exemple du type capacitif ou à infrarouge.

L'ensemble des éléments internes est généralement fixé à un caisson, souvent métallique, qui constitue donc la partie inférieure du dispositif de cuisson, normalement dissimulé dans le plan de travail ou dans le corps de la cuisinière. Ce caisson fait partie des éléments internes au sens de la présente invention, au sens où il peut être visible, notamment par réflexion lorsque le dispositif de cuisson est éclairé, par exemple au moyen de dispositifs lumineux situés au niveau de la hotte d'aspiration.

De préférence, le moyen de masquage est un revêtement déposé sur et/ou sous la plaque, ledit revêtement ayant la capacité d'absorber et/ou de réfléchir et/ou de diffuser le rayonnement lumineux, ou le moyen de masquage, disposé sous la plaque et solidaire ou non avec ladite plaque, est constitué d'une matière ayant la capacité d'absorber et/ou de diffuser le rayonnement lumineux, ou le moyen de masquage est constitué par des hétérogénéités situées au sein de la plaque ou au niveau de sa surface inférieure, notamment des texturations, lesdites hétérogénéités étant capables de déformer les images par des phénomènes de diffusion ou de réfraction du rayonnement lumineux. La simple coloration dans la masse de la plaque (notamment du fait de la présence de vanadium) ne peut constituer un moyen de masquage au sens de la présente invention.

Avantageusement, les moyens de masquage sont aptes à masquer au moins 50%, voire 70% et même 80%, 90% ou 95% de la surface occupée par les éléments internes. Dans le cas des moyens de chauffage par induction, les moyens de masquage sont de préférence aptes à masquer la quasi-totalité des éléments internes, à l'exclusion des dispositifs émettant de la lumière. Dans le cas des moyens de chauffage par rayonnement, les moyens de masquage sont de préférence aptes à masquer la quasi-totalité des éléments internes, à l'exclusion des dispositifs émettant de la lumière et des éléments chauffants.

De préférence, la plaque possède de manière intrinsèque une transmission lumineuse allant de 2,5% ou 3% à 25%, notamment d'au plus 10% et même 8%, ou encore 7% ou 5%, voire 4%. Une transmission lumineuse allant de 3 à 4% est particulièrement préférée. De fortes transmissions lumineuses accroissent en effet le risque de distinguer les éléments internes du dispositif de cuisson. En particulier dans le cas des transmissions les plus élevées, par exemple d'au moins 5 ou 10%, la plaque est avantageusement pourvue en son sein ou à sa surface inférieure d'hétérogénéités étant capables de déformer les images par des phénomènes de diffusion ou de réfraction du rayonnement lumineux. On entend par « surface inférieure » la surface de la plaque tournée vers les éléments internes du dispositif. Il peut à titre d'exemple s'agir de texturations, décrites plus en détail dans la suite du présent texte.

De préférence, la plaque possède de manière intrinsèque une transmission optique d'au moins 0,7%, 0,8%, notamment 0,9% voire 1% pour au moins une longueur d'onde comprise dans le domaine allant de 420 à 480 nm, de préférence pour toute longueur d'onde comprise dans ce domaine, ou dans le domaine allant de 450 à 480 nm. Il a en effet été observé qu'une transmission trop faible dans cette gamme de longueurs d'onde gênait la vision de la lumière bleue, obligeant à modifier de manière substantielle le circuit de commande des diodes électroluminescentes par rapport aux circuits de commande habituellement employés dans le cas des diodes électroluminescentes rouges. L'invention permet simplement d'ajuster la conception du circuit par le biais d'un ajustement mineur de la tension ou du courant d'alimentation des diodes.

La plaque possède une épaisseur allant de 2 à 6 mm, notamment de l'ordre de 3 ou 4 mm. De trop faibles épaisseurs ne permettent pas d'obtenir une résistance mécanique suffisante tandis que de fortes épaisseurs entraînent un inutile renchérissement de la plaque par l'utilisation de plus de matière.

La plaque est en vitrocéramique, notamment du type aluminosilicate de lithium. Ce type de vitrocéramique est en effet capable de résister à des chocs thermiques importants, grâce à un coefficient de dilatation thermique très faible voire nul.

De manière classique, la production de vitrocéramique s'effectue en plusieurs étapes : a) fusion des matières premières vitrifiables contenant au moins un agent de nucléation ; b) formage et refroidissement du verre - appelé « verre-mère » - à une température plus basse que son domaine de transformation ; c) traitement thermique de céramisation du verre.

Ce traitement thermique, appelé « céramisation », permet de faire croître au sein du verre des cristaux de structure β-quartz ou β-spodumène (selon la température de céramisation), qui ont la particularité de posséder des coefficients de dilatation thermique négatifs.

La présence, dans la vitrocéramique finale, de tels cristaux et d'une phase vitreuse résiduelle, permet d'obtenir un coefficient de dilatation thermique globalement nul ou très faible (la valeur absolue du coefficient de dilatation est typiquement inférieure ou égale à 15.10⁻⁷°C, voire 5.10⁻⁷/°C). La taille des cristaux de structure β-quartz est généralement très faible de manière à ne pas diffuser la lumière visible. Pour cette raison, la forme cristalline majoritaire, notamment unique, est de préférence de structure β-quartz

De préférence, la composition chimique de la plaque comprend les constituants suivants dans les limites définies ci-après exprimées en pourcentages pondéraux :

| | |
|---|---|
| SiO₂ | 52 - 75 % |
| Al₂O₃ | 18 - 27 % |
| Li₂O | 2,5 - 5,5 % |
| K₂O | 0 - 3 % |
| Na₂O | 0 - 3 % |
| ZnO | 0 - 3,5 % |
| MgO | 0 - 3 % |
| CaO | 0 - 2,5 % |
| BaO | 0 - 3,5 % |
| SrO | 0 - 2 % |
| TiO₂ | 1,2 - 5,5 % |
| ZrO₂ | 0 - 3 % |
| P₂O₅ | 0 - 8 %. |

Cette vitrocéramique peut comprendre jusqu'à 1 % en poids de constituants non essentiels qui n'affectent pas la fusion du verre-mère ou la dévitrification ultérieure conduisant à la vitrocéramique.

De préférence, la composition chimique de la plaque comprend les constituants suivants dans les limites définies ci-après exprimées en pourcentages pondéraux :

| | |
|---|---|
| SiO₂ | 64 - 70 % |
| Al₂O₃ | 18 - 21 % |
| Li₂O | 2,5 - 3,9 % |
| K₂O | 0 - <1,0 % |
| Na₂O | 0 - <1,0 % |
| ZnO | 1,2 - 2,8 % |
| MgO | 0,2 - 1,5 % |

| | |
|---|---|
| CaO | 0 - 1% % |
| BaO | 0 - 3 % |
| SrO | 0 - 1,4 % |
| TiO₂ | 1,8 - 3,2 % |
| ZrO₂ | 1,0 - 2,5 % |

La teneur en oxyde de baryum est de préférence comprise entre 1 et 3%, notamment entre 2 et 3% afin de diminuer la viscosité du verre. Pour la même raison, la teneur en silice est de préférence inférieure ou égale à 68%, notamment 67% voire même 66%. Les inventeurs ont également pu mettre en évidence un très fort effet de la teneur en chaux (CaO) sur la diminution de la viscosité, même pour de très faibles teneurs ajoutées. Pour cette raison, la teneur en CaO est d'au moins 0,2%, notamment 0,3% et même 0,4%.

Les meilleurs résultats sont obtenus pour des teneurs en alumine (Al₂O₃) inférieures ou égales à 19,5%, notamment 19%.

La vitrocéramique est colorée à l'aide d'oxyde de vanadium. L'oxyde de vanadium est ajouté aux matières premières du verre-mère avant la fusion, et il confère après céramisation une teinte orange-brune très soutenue, liée à une réduction du vanadium pendant le processus de céramisation. Ce colorant permet de teinter la vitrocéramique et d'obtenir la transmission lumineuse visée, tout en n'absorbant que faiblement le rayonnement infrarouge. La teneur pondérale en oxyde de vanadium, exprimée sous la forme V₂O₅, varie de 0,01 à 0,2%, notamment de 0,01 à 0,1%, et même de 0,01 à 0,06% ou de 0,01 à 0,04%.

D'autres oxydes colorants sont avantageusement ajoutés, en combinaison avec l'oxyde de vanadium. Il s'agit notamment de l'oxyde de fer (Fe₂O₂), dont la teneur pondérale varie de préférence de 0,02 à 0,2%, notamment entre 0,03 et 0,1% et/ou de l'oxyde de cobalt (CoO), dont la teneur pondérale varie de préférence de 0,01 à 0,12%, notamment de 0,01 à 0,07%. La présence d'oxyde de cobalt permet avantageusement de contrôler de manière indépendante la transmission lumineuse et la transmission dans les domaines de longueurs d'onde correspondant au bleu ou au vert.

En revanche, il est préférable d'exclure autant que faire se peut des colorants tels que l'oxyde de chrome (Cr₂O₃) ou de nickel (NiO). Leur teneur pondérale est de préférence inférieure ou égale à 200 ppm, voire 100 ppm et même 10 ou encore 5 ppm.

Afin que l'oxyde de vanadium puisse pleinement jouer son rôle de colorant, il est préférable d'ajouter un agent susceptible de réduire le vanadium lors de la céramisation. Il peut notamment s'agir de l'oxyde d'arsenic (As₂O₃), d'antimoine (Sb₂O₃), d'étain (SnO₂), ou d'un sulfure métallique. De préférence, les oxydes d'arsenic et d'antimoine sont toutefois exclus, sauf traces inévitables, pour des raisons environnementales et car ces oxydes se sont révélés non compatibles avec un procédé de formage du type flottage, dans lequel du verre en fusion est déversé sur un bain d'étain fondu. Ces différents agents sont également des agents affinants, qui permettent d'évacuer les inclusions gazeuses du bain de verre en fusion.

La teneur en oxyde d'étain est de préférence inférieure ou égale à 0,5%, notamment comprise entre 0,1 et 0,3%.

Le sulfure métallique est de préférence choisi parmi les sulfures de métal de transition, par exemple le sulfure de zinc, les sulfures de métal alcalin, par exemple le sulfure de potassium, le sulfure de sodium et le sulfure de lithium, les sulfures de métal alcalino-terreux, par exemple le sulfure de calcium, le sulfure de baryum, le sulfure de magnésium et le sulfure de strontium. Les sulfures préférés sont le sulfure de zinc, le sulfure de lithium, le sulfure de baryum, le sulfure de magnésium et le sulfure de strontium. Le sulfure de zinc s'est avéré particulièrement avantageux car il ne contribue pas à colorer le verre ou la vitrocéramique. Il est également privilégié quand la vitrocéramique doit contenir de l'oxyde de zinc : dans ce cas le sulfure de zinc joue un double rôle de réducteur/affinant et de source d'oxyde de zinc.

Le sulfure peut aussi être introduit dans les matières premières vitrifiables sous la forme d'un laitier ou d'une fritte de verre enrichie en sulfure qui présentent l'avantage d'accélérer la digestion des infondus, d'améliorer l'homogénéité chimique du verre et sa qualité optique. Toutefois, il est bien connu que les laitiers contiennent aussi du fer en quantité importante qui réduit la transmission des infrarouges. De ce point de vue, il est préférable d'utiliser des frittes de verre dont la composition chimique, notamment en fer, peut être parfaitement contrôlée.

De préférence, le sulfure est ajouté aux matières vitrifiables en une quantité inférieure à 2 %, avantageusement inférieure à 1 % et mieux encore comprise entre 0,07 et 0,8 % du poids total des matières vitrifiables. Des teneurs comprises entre 0,3 et 0,7% sont préférées.

Pour jouer pleinement son rôle affinant, le sulfure, notamment le sulfure de zinc, est de préférence associé à un réducteur tel que du coke. La teneur introduite en coke est de préférence comprise entre 800 et 2000 ppm, notamment entre 1200 et 1800 ppm (1 ppm = 0,0001% en masse).

Le sulfure peut également être associé à un agent oxydant, de préférence un sulfate. Les sulfates présentent l'avantage de ne pas former d'espèces colorantes dans le verre ou la vitrocéramique. Le sulfate peut notamment être un sulfate de sodium, de lithium, ou encore de magnésium. Les teneurs en sulfate introduit sont de préférence comprises entre 0,2 et 1% en masse, notamment entre 0,4 et 0,8%, exprimées en SO₃.

Le procédé d'obtention de la plaque selon l'invention comprend une étape de fusion et d'affinage d'un verre (- mère), puis, dans le cas d'une plaque en vitrocéramique, une étape de céramisation.

La fusion est réalisée de préférence dans un four de fusion du verre, à l'aide d'au moins un brûleur. Des matières premières (silice, spodumène etc.) sont introduites dans le four et subissent sous l'effet des hautes températures diverses réactions chimiques, telles que des réactions de décarbonatation, de fusion proprement dite...

L'étape d'affinage correspond à l'élimination des inclusions gazeuses emprisonnées dans la masse de verre fondu. L'affinage est généralement réalisé à une température au moins égale à la température de fusion, grâce à la génération de bulles qui vont entraîner vers la surface de la masse de verre fondu les inclusions indésirables. La fusion et l'affinage du verre(-mère) sont de préférence réalisés à des températures inférieures ou égales à 1700°C, notamment 1650°C et même 1600°C.

Après l'étape d'affinage, le verre(-mère) obtenu est traité dans les conditions habituelles pour la production de vitrocéramique ou de verre.

Ainsi, le verre peut être mis en forme, par exemple sous forme d'un ruban dans les conditions du procédé opérant par flottage du verre en fusion sur un bain d'étain fondu, ledit ruban étant ensuite découpé en plaques, ou directement sous forme de plaque par laminage, ou encore être moulé à la forme souhaitée.

Le cas échéant, le verre mis en forme subit ensuite un traitement thermique visant à le transformer en vitrocéramique.

Durant l'étape de céramisation, le verre-mère peut notamment subir un cycle de céramisation comprenant les étapes suivantes :
a) élévation de la température jusqu'au domaine de nucléation, généralement situé au voisinage du domaine de transformation, notamment à 50-80°C par minute,
b) traversée de l'intervalle de nucléation (650-850°C) en 15 à 60 minutes,
c) élévation de la température jusqu'à la température T du palier de céramisation comprise entre 900 et 1000°C en 5 à 30 minutes,
d) maintien de la température T du palier de céramisation pendant une temps t de 5 à 25 minutes,
e) refroidissement rapide jusqu'à la température ambiante.

Le procédé de fabrication de la plaque comprend généralement une opération de découpe, par exemple par traçage mécanique avec une molette, jet d'eau ou laser, suivie généralement par une opération de façonnage des bords (meulage, éventuellement biseautage).

Selon un premier mode de réalisation préféré, le moyen de masquage est un revêtement déposé sur et/ou sous la plaque, ledit revêtement ayant la capacité d'absorber et/ou de réfléchir et/ou de diffuser le rayonnement lumineux. Le revêtement est de préférence déposé sous la plaque, c'est-à-dire sur la surface en regard des éléments internes du dispositif, aussi appelée « surface inférieure ».

Dans le cas où les moyens de chauffage sont par induction, il est préférable de disposer le revêtement sur la presque totalité de la surface de plaque, à l'exclusion des zones situées en regard des dispositifs émettant de la lumière. Dans le cas des moyens de chauffage par rayonnement, il est préférable de disposer le revêtement sur la presque totalité de la surface de plaque, à l'exclusion des zones situées en regard des dispositifs émettant de la lumière et des éléments chauffants. De la sorte, les foyers radiants ou halogènes sont toujours visibles en état de marche.

Le revêtement peut être continu ou discontinu, par exemple présenter des motifs, ou une trame à maillage ou à piquetage ou moucheture. Dans certains cas, le revêtement peut être continu dans certaines zones, et discontinu dans d'autres zones. Ainsi, il est possible de disposer un revêtement discontinu au niveau des éléments chauffants et un revêtement continu ailleurs, tout en réservant une zone non revêtue au regard des dispositifs émettant de la lumière. La transmission lumineuse de la plaque munie de son revêtement, dans les zones revêtues, est de préférence d'au plus 0,5% et même 0,2%. Le revêtement peut être totalement opaque.

La zone en regard des dispositifs émettant de la lumière peut également être dotée d'un revêtement, à la condition que ce revêtement ne soit pas opaque.

Avantageusement, la plaque comporte également un décor en face supérieure, généralement en émail, dont la fonction est décorative, et non destiné à masquer les éléments internes du dispositif de cuisson, dans la mesure où la surface couverte par cet émail est très faible. Le décor permet généralement d'identifier les zones de chauffe (par exemple en les représentant sous forme de cercle), les zones de commande (notamment les touches sensitives), d'apporter des informations, de représenter un logo. Ce décor est à différencier du revêtement selon l'invention, qui constitue un réel moyen de masquage.

De manière préférée, le revêtement peut être une couche à base organique, telle qu'une couche de peinture ou de laque, ou une couche à base minérale, telle qu'un émail ou une couche métallique ou d'un oxyde, nitrure, oxynitrure, oxycarbure d'un métal.

La peinture pouvant être utilisée est avantageusement choisie de façon à résister à de hautes températures et à présenter une stabilité, dans le temps au niveau de sa couleur et de sa cohésion avec la plaque, et de façon à ne pas affecter les propriétés mécaniques de la plaque.

La peinture utilisée présente avantageusement une température de dégradation supérieure à 350°C, en particulier comprise entre 350°C et 700°C. Elle est généralement à base de résine(s), le cas échéant chargée (par exemple en pigment(s) ou colorant(s)), et éventuellement diluée pour ajuster sa viscosité en vue de son application sur la vitrocéramique, le diluant ou le solvant (par exemple du white spirit, du toluène, des solvants de type hydrocarbures aromatiques, comme le solvant commercialisé sous la marque Solvesso 100^{®} par la société Exxon, etc.) étant le cas échéant éliminé lors de la cuisson ultérieure de la peinture.

Par exemple, la peinture peut être une peinture à base d'au moins une résine silicone, en particulier une résine silicone modifiée par l'incorporation d'au moins un radical tel qu'un radical alkyde ou phényle ou méthyle, etc. On peut également ajouter des pigments comme colorants, tels que des pigments pour émaux (choisis par exemple parmi les composants contenant des oxydes métalliques, tels que des oxydes de chrome, des oxydes de cuivre, des oxydes de fer, des oxydes de cobalt, des oxydes de nickel, ou parmi les chromates de cuivre, les chromates de cobalt, etc.), TiO₂, etc. On peut également utiliser comme pigments des particules d'un ou de métaux tels que l'aluminium, le cuivre, le fer, etc, ou des alliages à base d'au moins un de ces métaux. Les pigments peuvent aussi être « à effet » (pigments à effet métallique, pigments interférentiels, pigments nacrés, etc.), avantageusement sous forme de paillettes d'oxyde d'aluminium (Al₂O₃) revêtues par des oxydes métalliques ; on peut citer par exemple les pigments commercialisés par la Société MERCK sous la marque « Xirallic^{®} », tels que des pigments ou pigments interférentiels TiO₂/Al₂O₃ (Xirallic^{®} T-50-10SW Crystal Silver ou Xirallic^{®} T-60-23SW Galaxy Blue ou Xirallic^{®} T-60-24SW Stellar Green), ou des pigments Fe₂O₃/Al₂O₃ (Xirallic^{®} T-60-50SW Fireside Copper ou (Xirallic^{®} F-60-51 Radiant Red). D'autres pigments à effet pouvant être utilisés sont par exemple les pigments nacrés à base de particules de mica revêtues par des oxydes ou combinaison d'oxydes (choisis par exemple parmi TiO₂, Fe₂O₃, Cr₂O₃, etc), tels que ceux commercialisés sous la marque IRIODIN^{®} par la Société Merck, ou à base de plaquettes de silice revêtues par des oxydes ou combinaison d'oxydes (comme ceux ci-dessus), tels que ceux commercialisés sous la marque Colorstream^{®} par la Société Merck. Des charges ou autres pigments de coloration classiques peuvent également être incorporés aux pigments à effet précités.

De façon particulièrement préférée, la peinture utilisée comprend au moins (ou est à base de) un (co)polymère résistant à haute température (en particulier présentant une température de dégradation supérieure à 400°C), cette peinture pouvant ou non renfermer au moins une charge minérale pour assurer sa cohésion ou son renforcement mécanique et/ou sa coloration. Ce (co)polymère ou résine peut notamment être une ou plusieurs des résines suivantes : résine polyimide, polyamide, polyfluorée, polysilsesquioxane et/ou polysiloxane.

Les résines polysiloxanes sont particulièrement préférées : elles sont incolores, et donc susceptibles d'être colorées (par exemple avec des charges ou pigments leur conférant la couleur souhaitée) ; elles peuvent être utilisées en l'état réticulable (généralement de par la présence de groupements SiOH et/ou SiOMe dans leur formule, ces groupements intervenant le plus souvent jusqu'à 1 à 6% en masse de leur masse totale), ou transformées (réticulées ou pyrolysées). Elles présentent avantageusement dans leur formule, des motifs phényle, éthyle, propyle et/ou vinyle, très avantageusement des motifs phényle et/ou méthyle. Elles sont de préférence choisies parmi les polydiméthylsiloxanes, les polydiphénylsiloxanes, les polymères de phénylméthylsiloxane et les copolymères de diméthylsiloxane-diphénylsiloxane.

Les résines polysiloxanes réticulables utilisées préférentiellement présentent généralement une masse moléculaire moyenne en poids (Mw) comprise entre 2000 et 300 000 Daltons.

De façon non limitative on peut indiquer que des résines Dow Corning^{®} 804, 805, 806, 808, 840, 249, 409 HS et 418 HS, Rhodorsil^{®} 6405 et 6406 de Rhodia, Triplus^{®} de General Electric Silicone et SILRES^{®} 604 de Wacker Chemie GmbH, utilisées seules ou en mélange conviennent parfaitement.

Les résines ainsi choisies sont notamment aptes à résister au chauffage par induction et peuvent également convenir (en particulier les résines polysiloxanes ciavant) pour d'autres types de chauffage (à brûleur à gaz, voire radiant ou halogène).

La peinture peut être exempte de charges minérales, notamment si son épaisseur reste faible. Toutefois, de telles charges minérales sont généralement utilisées, par exemple pour renforcer mécaniquement la couche de peinture déposée, contribuer à la cohésion de ladite couche, à son accrochage à la plaque, pour lutter contre l'apparition et la propagation de fissures en son sein, etc. A de telles fins, au moins une fraction desdites charges minérales présente préférentiellement une structure lamellaire. Les charges peuvent aussi intervenir pour la coloration. Le cas échéant, plusieurs types de charges complémentaires peuvent intervenir (par exemple des charges non colorées pour le renforcement mécanique et d'autres charges telles que des pigments pour la coloration). La quantité efficace de charges minérales correspond généralement à un taux volumique de 10 à 60%, plus particulièrement de 15 à 30% (taux volumiques basés sur le volume total des charges et de la peinture).

L'épaisseur de chaque couche de peinture déposée peut être comprise entre 1 et 100 microns, notamment entre 5 et 50 microns. L'application de la peinture ou résine peut s'effectuer par toute technique adaptée, telle que le dépôt à la brosse, à la raclette, par pulvérisation, dépôt électrostatique, trempage, dépôt au rideau, dépôt par sérigraphie, jet d'encre etc. et se fait de préférence par sérigraphie (ou éventuellement dépôt à la raclette). La technique de sérigraphie est particulièrement avantageuse en ce qu'elle permet aisément de réserver certaines zones de la plaque, notamment les zones qui seront en regard des dispositifs émettant de la lumière, voire les zones situées en regard des moyens de chauffage par rayonnement. Lorsque d'autres techniques sont employées, les réserves peuvent être obtenues en disposant des masques adéquats sur les zones que l'on ne souhaite pas recouvrir.

Le dépôt peut être suivi par un traitement thermique destiné à assurer selon les cas le séchage, la réticulation, la pyrolyse, etc. de la ou des couches déposées.

De préférence, on choisit au moins une couche de peinture dans laquelle la résine a été, au moins en partie, réticulée et/ou pyrolysée, partiellement ou en totalité, et/ou n'a pas été traitée thermiquement (la résine peut éventuellement être destinée à être éliminée des endroits où elle n'a pas été traitée thermiquement), ladite couche de peinture consistant, en partie ou en totalité, en un mélange a) de charges minérales et b) d'au moins une résine polysiloxane réticulable (quasi) exempte de précurseur(s) de matériau(x) carboné(s) et/ou d'au moins une résine polysiloxane réticulée (quasi) exempte de matériau(x) carboné(s) et de précurseur(s) de matériau(x) carboné(s) et/ou d'une matrice minérale poreuse à base de silice (la résine ayant par exemple été pyrolysée et se trouvant donc minéralisée), (quasi) exempte de matériau(x) carboné(s), les charges minérales étant distribuées dans la résine ou la matrice.

Comme indiqué précédemment, le revêtement peut également être un émail. L'émail est formé à partir d'une poudre comprenant une fritte de verre et des pigments (ces pigments pouvant également faire partie de la fritte), et d'un médium pour l'application sur le substrat.

La fritte de verre est de préférence obtenue à partir d'un mélange vitrifiable comprenant généralement des oxydes choisis notamment parmi les oxydes de silicium, de zinc, de sodium, de bore, de lithium, de potassium, de calcium, d'aluminium, de magnésium, de baryum, de strontium, d'antimoine, de titane, de zirconium, de bismuth. Des frittes de verre particulièrement adaptées au cas des vitrocéramiques sont décrites dans les demandes FR 2782318 ou WO 2009/092974.

Les pigments peuvent être choisis parmi les composés contenant des oxydes métalliques tels que des oxydes de chrome, de cuivre, de fer, de cobalt, de nickel, etc, ou peuvent être choisis parmi les chromates de cuivre ou de cobalt, etc, le taux de pigment (s) dans l'ensemble fritte (s) /pigment(s) étant par exemple compris entre 30 et 60 % en poids.

Les pigments peuvent aussi être « à effet » (pigments à effet métallique, pigments interférentiels, pigments nacrés, etc.), tels que ceux cités précédemment en relation avec une peinture. Le taux de pigments à effet peut être par exemple de l'ordre de 30 à 60% en poids par rapport à la base (fritte de verre) dans laquelle ils sont incorporés.

La couche peut être notamment déposée par sérigraphie (la base et les pigments étant le cas échéant mis en suspension dans un médium approprié généralement destiné à se consumer dans une étape de cuisson ultérieure, ce médium pouvant notamment comporter des solvants, des diluants, des huiles, des résines, etc), l'épaisseur de la couche étant par exemple de l'ordre de 1 à 6 µm.

La technique de sérigraphie est particulièrement avantageuse en ce qu'elle permet aisément de réserver certaines zones de la plaque, notamment les zones qui seront en regard des dispositifs émettant de la lumière, voire les zones situées en regard des moyens de chauffage par rayonnement.

Dans le cas des plaques en vitrocéramique, le dépôt de la couche d'émail est de préférence réalisé avant l'étape de céramisation, laquelle sert alors à cuire l'émail.

La ou chaque couche d'émail utilisée pour former le revêtement est de préférence une couche simple, isolée d'autre(s) couche(s) d'émail éventuelle (s), et d'épaisseur n'excédant généralement pas 6 um, de préférence n'excédant 3 um. La couche d'émail est en général déposée par sérigraphie.

Le revêtement peut encore être une couche métallique ou d'un oxyde, nitrure, oxynitrure, oxycarbure d'un métal. Par « couche » on doit également comprendre les empilements de couches. Cette couche peut être absorbante et/ou réfléchissante.

Cette couche peut donc être par exemple au moins une couche simple métallique ou essentiellement métallique (par exemple une couche mince d'Ag, W, Ta, Mo, Ti, Al, Cr, Ni, Zn, Fe, ou d'un alliage à base de plusieurs de ces métaux, ou une couche mince à base d'aciers inoxydables, etc.), ou peut être un empilement de (sous) couches comprenant une ou plusieurs couches métalliques, par exemple une couche métallique (ou essentiellement métallique) avantageusement protégée (revêtue sur au moins une face et de préférence sur ses deux faces opposées) par au moins une couche à base de matériau diélectrique (par exemple au moins une couche en argent ou en aluminium revêtue d'au moins une couche de protection en Si₃N₄ - en particulier un empilement Si₃N₄/métal/Si₃N₄ - ou en SiO₂).

Il peut alternativement s'agir d'un revêtement monocouche à base de matériau diélectrique à fort indice de réfraction n, c'est-à-dire supérieur à 1.8, de préférence supérieur à 1,95, de façon particulièrement préférée supérieur à 2, par exemple une monocouche de TiO₂, ou de Si₃N₄, ou de SnO₂, etc.

Dans un autre mode de réalisation avantageux, la couche peut être formée d'un empilement de (sous) couches minces à base de matériau(x) diélectrique(s) alternativement à forts (de préférence supérieur à 1,8, voire 1,95, voire 2, comme explicité précédemment) et faibles (de préférence inférieur à 1,65) indices de réfraction, notamment de matériau(x) de type oxyde métallique (ou nitrure ou oxynitrure de métaux), tel que TiO₂, SiO₂ ou oxyde mixte (étain-zinc, zinc-titane, silicium-titane, etc.) ou alliage, etc., la (sous) couche déposée le cas échéant en premier et se trouvant donc contre la face intérieure de la plaque étant avantageusement une couche de fort indice de réfraction.

Comme matériau de (sous) couche à fort indice de réfraction, on peut citer par exemple TiO₂ ou éventuellement SnO₂, Si₃N₄, SnₓZn_{y}O_{z}, Ti_{z}nOₓ ou SiₓTi_{y}O_{z}, ZnO, ZrO₂, Nb₂O₅ etc. Comme matériau de (sous) couche à faible indice de réfraction, on peut citer par exemple SiO₂, ou éventuellement un oxynitrure et/ou un oxycarbure de silicium, ou un oxyde mixte de silicium et d'aluminium, ou un composé fluoré par exemple de type MgF₂ ou AlF₃, etc.

L'empilement peut comprendre par exemple au moins trois (sous) couches, la couche la plus proche du substrat étant une couche de fort indice de réfraction, la couche intermédiaire étant une couche à faible indice de réfraction, et la couche extérieure étant une couche à fort indice de réfraction (par exemple un empilement comprenant l'alternance de couches d'oxydes suivante : (substrat)-TiO₂/SiO₂/TiO₂).

L'épaisseur (géométrique) de chaque couche à base de couche(s) mince(s) déposée est généralement comprise entre 15 et 1000 nm, en particulier 20 et 1000 nm (l'épaisseur du substrat étant généralement de quelques millimètres, le plus souvent autour de 4 mm), l'épaisseur de chacune des (sous) couches (dans le cas d'un empilement) pouvant varier entre 5 et 160 nm, généralement entre 20 et 150 nm (par exemple dans le cas de l'empilement TiO₂/SiO₂/TiO₂, elle peut être de l'ordre de quelques dizaines de nanomètres, par exemple de l'ordre de 60-80 nm, pour les couches de TiO₂ et de l'ordre de 60 -80 ou 130-150 nm pour la couche de SiO₂ selon l'aspect, par exemple plutôt argenté ou plutôt doré, que l'on souhaite obtenir).

La couche à base de couche (s) mince (s) peut être appliquée sur la plaque, généralement après céramisation, en ligne ou en reprise (par exemple après découpe et/ou façonnage de ladite plaque). Elle peut être appliquée notamment par pyrolyse (poudre, liquide, gazeuse), par évaporation, ou par pulvérisation. De préférence, elle est déposée par pulvérisation et/ou par une méthode de dépôt sous vide et/ou assistée par plasma ; on utilise en particulier le mode de dépôt de couche(s) par pulvérisation cathodique (par exemple par pulvérisation cathodique magnétron), notamment assistée par champ magnétique (et en courant continu ou alternatif), les oxydes ou nitrures étant déposés à partir de cible(s) de métal ou d'alliage ou de silicium ou céramique(s), etc. appropriées, si nécessaire dans des conditions oxydantes ou nitrurantes (mélanges le cas échéant d'argon/oxygène ou d'argon/azote). On peut déposer par exemple les couches d'oxyde par pulvérisation réactive du métal en question en présence d'oxygène et les couches de nitrures en présence d'azote. Pour faire du SiO₂ ou du Si₃N₄ on peut partir d'une cible en silicium que l'on dope légèrement avec un métal comme l'aluminium pour la rendre suffisamment conductrice. La ou les (sous) couches choisies selon l'invention se condensent sur le substrat de façon particulièrement homogène, sans qu'il ne se produise de séparation ou délaminage.

Selon un deuxième mode de réalisation préféré, le moyen de masquage, disposé sous la plaque et solidaire ou non avec ladite plaque, est constitué d'une matière ayant la capacité d'absorber et/ou de diffuser le rayonnement lumineux.

A titre d'exemples, il peut s'agir d'un tissu absorbant (par exemple de couleur noire), d'une feuille en matière plastique, d'une feuille ou d'une tôle en matière métallique, par exemple peinte dans une couleur sombre. Le tissu peut notamment être à base de fibres de verre.

Ces feuilles ou autres tôles peuvent par exemple être collées ou fixées par d'autres moyens à la surface inférieure de la plaque en verre ou vitrocéramique, ou fixées à une certaine distance non-nulle de cette dernière, mais au-dessus des éléments internes que l'on souhaite masquer. Des réserves sont pratiquées dans ces feuilles ou tôles dans les zones que l'on ne souhaite pas masquer, notamment les zones situées en regard des dispositifs émettant de la lumière.

La matière absorbante ou diffusante disposée sous la plaque peut masquer l'intégralité des éléments internes, à l'exclusion des dispositifs émetteurs de lumière et, notamment dans le cas des moyens de chauffage par rayonnement, des éléments chauffants.

Selon un troisième mode de réalisation préféré, le moyen de masquage est constitué par des hétérogénéités situées au sein de la plaque ou au niveau de sa surface inférieure, notamment des texturations, lesdites hétérogénéités étant capables de déformer les images par des phénomènes de diffusion ou de réfraction du rayonnement lumineux.

Ces texturations peuvent être obtenues notamment lors du formage de la plaque, par laminage entre deux rouleaux, généralement métalliques ou en céramique, dont l'un est pourvu de texturations. Divers motifs aptes à réfracter la lumière sont possibles : portions de sphères, pyramides etc.... Les dimensions typiques de ces motifs sont comprises entre 0,2 et 1 mm.

Si besoin était, il est possible de limiter ou supprimer cette réfraction dans les zones situées en regard des dispositifs émettant de la lumière en déposant entre les motifs de la texturation une résine dont l'indice de réfraction est proche de celui de la plaque.

Les hétérogénéités peuvent aussi être constituées par des cristaux diffusant la lumière, situés au sein-même de la plaque vitrocéramique. Il peut notamment s'agir de cristaux de β-quartz ou de β-spodumène, dont la taille est de l'ordre de 300 à 1000 nm.

La plaque de vitrocéramique peut par exemple contenir des cristaux de tailles différentes selon les zones, notamment des cristaux diffusant la lumière afin de constituer un moyen de masquage dans les zones en regard des éléments internes à masquer, et des cristaux ne diffusant pas la lumière dans les zones en regard des éléments internes que l'on ne souhaite pas masquer. Une telle différence de tailles selon la zone peut être obtenue par céramisation différentielle, en disposant pendant la céramisation, aux endroits ad hoc de la plaque, des écrans thermiques ou des dispositifs de refroidissement limitant la température subie. Dans la mesure où le procédé de céramisation influe sur la transmission optique de la plaque, du fait notamment de son influence sur le degré de réduction de l'oxyde de vanadium, une telle céramisation différentielle peut également être employée pour assombrir sélectivement certaines zones de la plaque.

L'invention a également pour objet une plaque en vitrocéramique colorée à l'aide d'oxyde de vanadium pour dispositif de cuisson, ladite plaque ayant de manière intrinsèque une transmission lumineuse allant de 2,5% à 40% et une transmission optique d'au moins 0,6% pour au moins une longueur d'onde comprise dans le domaine allant de 420 à 480 nm, ladite plaque étant revêtue sur au moins une de ses faces par un revêtement ayant la capacité d'absorber et/ou de réfléchir et/ou de diffuser le rayonnement lumineux.

Cette plaque est de préférence telle que le revêtement est une couche à base organique, telle qu'une couche de peinture ou de laque, ou une couche à base minérale, telle qu'un émail ou une couche métallique ou d'un oxyde, nitrure, oxynitrure, oxycarbure d'un métal. Les revêtements préférés sont ceux décrits précédemment.

L'invention sera mieux comprise à la lumière des exemples non limitatifs qui suivent.

Dans un four chauffé à l'aide de brûleurs oxygène-gaz naturel sont fondus différents verres-mères, présentant les compositions indiquées dans le tableau 1 ci-après. La température de fusion est de l'ordre de 1650°C. Le verre-mère mis en forme de plaque par laminage subit ensuite un traitement de céramisation pour former une vitrocéramique, ce traitement étant opéré selon des cycles comprenant les étapes a) à e) décrit précédemment. A titre d'indication, l'exemple 5 a été céramisé selon un cycle impliquant une montée à 660°C en 20 minutes, puis une montée à 820°C en 40 minutes, et à 930°C en 20 minutes, avec un maintien de 15 minutes à cette température. L'exemple 6 a été céramisé selon un cycle plus rapide : 17 minutes jusqu'à 660°C, 25 minutes jusqu'à 820°C, 7 minutes jusqu'à 920°C, avec un maintien à cette température pendant 10 minutes.

La composition C1 est un exemple comparatif.

Le tableau 1 indique pour chaque exemple, outre sa composition chimique pondérale, l'épaisseur de la plaque (en mm), la transmission optique de la plaque pour une longueur d'onde de 465 nm, et la transmission lumineuse au sens de la norme ISO 9050 :2003. Les transmissions sont celles de la plaque, à l'épaisseur indiquée.

**Tableau 1**

| | C1 | 1 | 2 | 3 | 4 | 5 | 6 |
|---|---|---|---|---|---|---|---|
| SiO₂ | 64,7 | 65,6 | 65,5 | 65,5 | 65,5 | 69,9 | 67,2 |
| Al₂O₃ | 20,5 | 20,5 | 20,3 | 20,3 | 20,3 | 19,6 | 20,2 |
| Li₂O | 3,8 | 3,7 | 3,8 | 3,8 | 3,8 | 3,5 | 3,7 |
| TiO₂ | 3,0 | 3,0 | 2,9 | 2,9 | 2,9 | 2,3 | 2,9 |
| ZrO₂ | 1,4 | 1,3 | 1,3 | 1,3 | 1,3 | 1,5 | 1,2 |
| ZnO | 1,5 | 1,5 | 1,5 | 1,5 | 1,5 | 1,7 | 1,5 |
| MgO | 0,4 | 0,3 | 0,4 | 0,4 | 0,4 | 0,95 | 0,4 |
| CaO | 0,4 | 0,4 | 0,5 | 0,5 | 0,5 | - | - |
| BaO | 2,5 | 2,5 | 2,6 | 2,6 | 2,6 | - | 2,5 |
| Na₂O | 0,6 | 0,6 | 0,6 | 0,6 | 0,6 | | - |
| K₂O | 0,3 | 0,2 | 0,2 | 0,2 | 0,2 | - | - |
| MnO | 0,03 | 0,02 | - | - | - | - | - |
| SnO₂ | 0,25 | 0,3 | 0,29 | 0,29 | 0,29 | 0,22 | 0,29 |
| Fe₂O₃ | 0,09 | 0,09 | 0,1 | 0,085 | 0,085 | 0,04 | 0,09 |
| V₂O₅ | 0,025 | 0,03 | 0,03 | 0,03 | 0,025 | 0,06 | 0,03 |
| CoO | - | 0,015 | - | - | - | - | - |
| Cr₂O₃ | - | 0,001 | | | | 0,001 | 0,001 |
| | | | | | | | |
| épais seur (mm) | 4,0 | 4,0 | 4,0 | 4,0 | 4,0 | 3,0 | 3,0 |
| T (465 nm) | 0,4% | 1,2% | 0,7% | 1,1% | 1,6% | 3,0% | 2,0% |
| TL | 1,4% | 3,2% | 3,3% | 4,5% | 6,0% | 15,7% | 5,0% |

Ces plaques en vitrocéramique sont transformées pour servir de plaques de cuisson recouvrant des foyers radiants.

Une peinture noire mate résistant aux températures élevées, à base de résines silicone et alkyde, commercialisée par la société Zolpan sous la référence 376913 est appliquée sur la surface inférieure de la plaque par sérigraphie. Toute la plaque est recouverte, à l'exception des zones de chauffe (en regard des éléments chauffants) et d'affichage (en regard des diodes électroluminescentes). Après cuisson à 200°C en four tunnel pendant environ 3 minutes, la couche de peinture, qui présente une épaisseur d'environ 20 micromètres, est parfaitement opaque, et donc apte à masquer les éléments internes du dispositif de cuisson.

Dans le cas d'une plaque destinée à un dispositif de cuisson par induction, la plaque aurait avantageusement été entièrement recouverte de peinture (sur la face inférieure), à l'exception des zones en regard des diodes électroluminescentes.

Le dispositif de cuisson est obtenu par les moyens habituels en associant la plaque revêtue de sa couche de peinture (disposée face aux éléments internes), aux divers éléments habituellement employés : foyers radiants, cablage électrique, cartes électroniques destinées à piloter les moyens de commande, de contrôle et d'affichage, isolants thermiques, dispositifs d'affichage, moyens de fixation mécanique, thermolimiteurs, l'ensemble étant disposé dans un caisson en tôle.

Les dispositifs d'affichage sont des diodes électroluminescentes émettant de la lumière bleue (longueur d'onde de 465 nm ou de 428 nm), sous la forme d'afficheurs 7 segments. Il peut notamment s'agir d'afficheurs commercialisés par la société Forge Europa sous les références FN1-0392B050JGW ou FN1-0392B010JGW. La tension d'alimentation des diodes varie typiquement de 3 à 4 V.

Les diodes électroluminescentes bleues sont parfaitement visibles à travers les plaques selon l'invention. Ce n'est pas le cas en revanche pour les plaques présentant la composition et les propriétés optiques de la plaque C1. L'affichage est à peine visible, surtout en cas d'éclairage important provenant de l'extérieur. La trop faible luminosité obtenue dans le cas de l'exemple comparatif obligerait à augmenter de manière importante l'intensité du courant d'alimentation des diodes ou à modifier le circuit d'alimentation.

La luminance d'afficheurs émettant dans le bleu vus au travers des plaques des exemples 1 et C1 a également été évaluée.

Les mesures ont été effectuées à l'aide d'un luminancemètre positionné à une distance de 50 cm au dessus d'une plateforme comprenant 4 afficheurs bleus à 7 segments. L'appareil possède un champ de vision permettant de visualiser simultanément tous les afficheurs de la plateforme. La mesure de la luminance consiste à enregistrer une image avec le luminancemètre puis à traiter numériquement le signal détecté pour extraire la valeur moyenne de la luminance émise en direction de l'appareil. La mesure commence par une mise au point de l'image à la surface des afficheurs allumés. On enregistre ensuite la luminance provenant des afficheurs seuls avant de disposer successivement à leur surface les échantillons de plaque à étudier. Durant la mesure, les plaques reposent directement sur les 4 afficheurs.

La luminance mesurée au travers de la plaque comparative C1 n'est que de 1,50 cd/m². Au travers de la plaque 1 en revanche, la luminance passe à 3,11 cd/m².

## Revendications

1. Dispositif de cuisson comprenant des éléments internes parmi lesquels au moins un moyen de chauffage, des moyens de commande et/ou de contrôle et au moins un dispositif émettant de la lumière, lesdits éléments internes étant recouverts par au moins une plaque en vitrocéramique colorée à l'aide d'oxyde de vanadium ladite plaque ayant une teneur pondérale en oxyde de vanadium, exprimée sous la forme V₂O₅, variant de 0,01 à 0,2%, au moins un dispositif émettant de la lumière n'étant pas de couleur rouge vu au travers de ladite plaque, ladite plaque ayant une épaisseur allant de 2 à 6 mm et de manière intrinsèque une transmission lumineuse allant de 2,3% à 40% et une transmission optique d'au moins 0,6% pour au moins une longueur d'onde comprise dans le domaine allant de 420 à 480 nm, ledit dispositif de cuisson étant tel que l'on dispose au-dessus, en dessous ou au sein de ladite plaque au moins un moyen de masquage destiné à masquer au moins une partie desdits éléments internes.

2. Dispositif selon la revendication 1, tel qu'au moins un moyen de chauffage est choisi parmi les moyens de chauffage par induction et les moyens de chauffage par rayonnement.

3. Dispositif selon l'une des revendications précédentes, tel que lorsque les moyens de chauffage sont des moyens de chauffage par induction, les moyens de masquage sont aptes à masquer la quasi-totalité des éléments internes à l'exclusion des dispositifs émettant de la lumière, ou tel que lorsque les moyens de chauffage sont des moyens de chauffage par rayonnement, les moyens de masquage sont aptes à masquer la quasi-totalité des éléments internes à l'exclusion des dispositifs émettant de la lumière et des éléments chauffants.

4. Dispositif selon l'une des revendications précédentes, tel que la plaque possède de manière intrinsèque une transmission lumineuse allant de 3% à 25%, notamment d'au plus 10% et même 5%.

5. Dispositif selon l'une des revendications précédentes, tel que la plaque possède de manière intrinsèque une transmission optique d'au moins 0,8%, voire 1% pour au moins une longueur d'onde comprise dans le domaine allant de 420 à 480 nm.

6. Dispositif selon l'une des revendications précédentes, tel que la plaque possède une épaisseur allant de 3 à 4 mm.

7. Dispositif selon la revendication 1, tel que la plaque vitrocéramique est du type aluminosilicate de lithium, dont la composition chimique comprend les constituants suivants dans les limites définies ci-après exprimées en pourcentages pondéraux :
| | |
|---|---|
| SiO₂ | 52 - 75 % |
| Al₂O₃ | 18 - 27 % |
| Li₂O | 2,5 - 5,5 % |
| K₂O | 0 - 3 % |
| Na₂O | 0 - 3 % |
| ZnO | 0 - 3,5 % |
| MgO | 0 - 3 % |
| CaO | 0 - 2,5 % |
| BaO | 0 - 3,5 % |
| SrO | 0 - 2 % |
| TiO₂ | 1,2 - 5,5 % |
| ZrO₂ | 0 - 3 % |
| P₂O₅ | 0 - 8 %. |

8. Dispositif selon la revendication précédente, tel que la vitrocéramique colorée à l'aide d'oxyde de vanadium présente une teneur pondérale en oxyde de vanadium, exprimée sous la forme V₂O₅, variant de 0,01 à 0,1%.

9. Dispositif selon l'une des revendications précédentes, tel que le moyen de masquage est un revêtement déposé sur et/ou sous la plaque, ledit revêtement ayant la capacité d'absorber et/ou de réfléchir et/ou de diffuser le rayonnement lumineux.

10. Dispositif selon la revendication précédente, tel que le revêtement est une couche à base organique, telle qu'une couche de peinture ou de laque, ou une couche à base minérale, telle qu'un émail ou une couche métallique ou d'un oxyde, nitrure, oxynitrure, oxycarbure d'un métal.

11. Dispositif selon l'une des revendications 1 à 8, tel que le moyen de masquage, disposé sous la plaque et solidaire ou non avec ladite plaque, est constitué d'une matière ayant la capacité d'absorber et/ou de diffuser le rayonnement lumineux.

12. Dispositif selon l'une des revendications 1 à 8, tel que le moyen de masquage est constitué par des hétérogénéités situées au sein de la plaque ou au niveau de sa surface inférieure, notamment des texturations, lesdites hétérogénéités étant capables de déformer les images par des phénomènes de diffusion ou de réfraction du rayonnement lumineux.

13. Plaque en vitrocéramique colorée à l'aide d'oxyde de vanadium pour dispositif de cuisson, ladite plaque ayant une teneur pondérale en oxyde de vanadium, exprimée sous la forme V₂O₅, variant de 0,01 à 0,2% et une épaisseur allant de 2 à 6 mm et de manière intrinsèque une transmission lumineuse allant de 2,5% à 40% et une transmission optique d'au moins 0,6% pour au moins une longueur d'onde comprise dans le domaine allant de 420 à 480 nm, ladite plaque étant revêtue sur au moins une de ses faces par un revêtement ayant la capacité d'absorber et/ou de réfléchir et/ou de diffuser le rayonnement lumineux.

14. Plaque selon la revendication précédente, telle que le revêtement est une couche à base organique, telle qu'une couche de peinture ou de laque, ou une couche à base minérale, telle qu'un émail ou une couche métallique ou d'un oxyde, nitrure, oxynitrure, oxycarbure d'un métal.

## Patentansprüche

1. Kochvorrichtung, umfassend innere Elemente, unter diesen mindestens ein Heizmittel, Betätigungs- und/oder Steuermittel und mindestens eine Licht emittierende Vorrichtung, wobei die inneren Elemente durch mindestens ein Glaskeramikkochfeld, das unter Verwendung von Vanadiumoxid gefärbt ist, abgedeckt sind, wobei das Kochfeld einen Gewichtsanteil an Vanadiumoxid, ausgedrückt durch die Form V₂O₅, vorweist, der von 0,01 bis 0,2 % variiert, mindestens eine Licht emittierende Vorrichtung, die, gesehen durch das Kochfeld, keine rote Farbe besitzt, wobei das Kochfeld eine Dicke von 2 bis 6 mm und eine intrinsische Lichtdurchlässigkeit von 2,3 % bis 40 % und eine optische Durchlässigkeit von mindestens 0,6 % für mindestens eine Wellenlänge, die in dem Bereich von 420 bis 480 nm enthalten ist, aufweist, wobei die Kochvorrichtung zum Beispiel über, unter oder inmitten des Kochfelds angeordnet wird, mindestens ein Verdeckungsmittel, das dafür bestimmt ist, mindestens einen Teil der inneren Elemente zu verdecken.

2. Vorrichtung nach Anspruch 1, wobei mindestens ein Heizmittel aus den Induktionsheizmitteln und den Strahlungsheizmitteln ausgewählt ist.

3. Vorrichtung nach einem der vorstehenden Ansprüche, wobei, wenn die Heizmittel Induktionsheizmittel sind, die Verdeckungsmittel geeignet sind, fast alle inneren Elemente mit Ausnahme der Licht emittierenden Vorrichtungen zu verdecken, oder wobei, wenn die Heizmittel Strahlungsheizmittel sind, die Verdeckungsmittel geeignet sind, fast alle inneren Elemente mit Ausnahme der Licht emittierenden Vorrichtungen und der Heizelemente zu verdecken.

4. Vorrichtung nach einem der vorstehenden Ansprüche, wobei das Kochfeld eine intrinsische Lichtdurchlässigkeit von 3 % bis 25 %, insbesondere von höchstens 10 % und sogar 5 %, besitzt.

5. Vorrichtung nach einem der vorstehenden Ansprüche, wobei das Kochfeld eine intrinsische optische Durchlässigkeit von mindestens 0,8 % oder 1 % für mindestens eine Wellenlänge, die in dem Bereich von 420 bis 480 nm enthalten ist, besitzt.

6. Vorrichtung nach einem der vorstehenden Ansprüche, wobei das Kochfeld eine Dicke von 3 bis 4 mm besitzt.

7. Vorrichtung nach Anspruch 1, wobei es sich bei dem Glaskeramikkochfeld um eine Lithiumaluminosilicatart handelt, deren chemische Zusammensetzung die folgenden Bestandteile in den definierten Grenzen umfasst, die nachstehend in Gewichtsprozent ausgedrückt sind:
| | |
|---|---|
| SiO₂ | 52 - 75 % |
| Al₂O₃ | 18 - 27 % |
| Li₂O | 2,5 - 5,5 % |
| K₂O | 0 - 3 % |
| Na₂O | 0 - 3 % |
| ZnO | 0 - 3,5 % |
| MgO | 0 - 3 % |
| CaO | 0 - 2,5% |
| BaO | 0 - 3,5 % |
| SrO | 0 - 2 % |
| TiO₂ | 1,2 - 5,5 % |
| ZrO₂ | 0 - 3 % |
| P₂O₅ | 0 - 8 %. |

8. Vorrichtung nach dem vorstehenden Anspruch, wobei die unter Verwendung von Vanadiumoxid gefärbte Glaskeramik einen Gewichtsanteil an Vanadiumoxid, ausgedrückt durch die Form V₂O₅, der von 0,01 bis 0,1 % variiert, aufweist.

9. Vorrichtung nach einem der vorstehenden Ansprüche, wobei das Verdeckungsmittel eine Beschichtung ist, die auf und/oder unter dem Kochfeld abgeschieden ist, wobei die Beschichtung die Kapazität zum Absorbieren und/oder Reflektieren und/oder Streuen der Lichtstrahlung vorweist.

10. Vorrichtung nach dem vorstehenden Anspruch, wobei die Beschichtung eine Schicht aus einer organischen Base, wie einer Farb- oder Lackschicht, oder eine Schicht aus einer anorganischen Base, wie einem Schmelzemail, oder eine Metall- oder eine Schicht aus einem Oxid, Nitrid, Oxinitrid, Oxycarbid eines Metalls ist.

11. Vorrichtung nach einem der Ansprüche 1 bis 8, wobei das Verdeckungsmittel, das unter dem Kochfeld angeordnet und mit dem Kochfeld fest verbunden ist oder nicht, aus einem Material, das die Kapazität zum Absorbieren und/oder Streuen der Lichtstrahlung vorweist, besteht.

12. Vorrichtung nach einem der Ansprüche 1 bis 8, wobei das Verdeckungsmittel Ungleichartigkeiten, die sich in dem Kochfeld oder an seiner unteren Oberfläche befinden, insbesondere Maserungseffekte, schafft, wobei die Ungleichartigkeiten fähig sind, die Bilder durch Streuungs- oder Refraktionsphänomene der Lichtstrahlung zu verformen.

13. Unter Verwendung von Vanadiumoxid gefärbtes Glaskeramikkochfeld für eine Kochvorrichtung, wobei das Kochfeld einen Gewichtsanteil an Vanadiumoxid, ausgedrückt durch die Form V₂O₅, aufweist, der von 0,01 bis 0,2 % variiert, und eine Dicke von 2 bis 6 mm und eine intrinsische Lichtdurchlässigkeit von 2,5 % bis 40 % und eine optische Durchlässigkeit von mindestens 0,6 % für mindestens eine Wellenlänge, die in dem Bereich von 420 bis 480 nm enthalten ist, aufweist, wobei das Kochfeld auf mindestens einer seiner Flächen durch eine Beschichtung, die die Kapazität zum Absorbieren und/oder Reflektieren und/oder Zerstreuen der Lichtstrahlung aufweist, verdeckt ist.

14. Kochfeld nach dem vorstehenden Anspruch, wobei die Beschichtung eine Schicht aus einer organischen Base, wie einer Farb- oder Lackschicht, oder eine Schicht aus einer anorganischen Base, wie einem Schmelzemail, oder eine Metall- oder eine Schicht aus einem Oxid, Nitrid, Oxinitrid, Oxycarbid eines Metalls ist.

## Claims

1. A cooking device comprising internal elements including at least one heating means, control and/or monitoring means and at least one light-emitting device, said internal elements being covered with at least one glass-ceramic plate colored using vanadium oxide said plate having a wight content of vanadium oxide, expressed as V₂O₅, from 0.01 to 0.2%, at least one light-emitting device not being of red color seen through said plate, said plate having a thickness from 2 to 6 mm and intrinsically having a light transmission ranging from 2.3% to 40% and an optical transmission of at least 0.6% for at least one wavelength within the region ranging from 420 to 480 nm, said cooking device being such that at least one masking means intended to mask at least one part of said internal elements is placed on top of, underneath or within said plate.

2. The device as claimed in claim 1, wherein at least one heating means is chosen from induction heating means and radiant heating means.

3. The device as claimed in one of the preceding claims, wherein when the heating means are induction heating means, the masking means are capable of masking almost all of the internal elements with the exception of the light-emitting devices, or wherein when the heating means are radiant heating means, the masking means are capable of masking almost all of the internal elements with the exception of the light-emitting devices and the heating elements.

4. The device as claimed in one of the preceding claims, wherein the plate intrinsically has a light transmission ranging from 3% to 25%, in particular of at most 10% and even 5%.

5. The device as claimed in one of the preceding claims, wherein the plate intrinsically has an optical transmission of at least 0.8%, or even 1% for at least one wavelength within the region ranging from 420 to 480 nm.

6. The device as claimed in one of the preceding claims, wherein the plate has a thickness ranging from 3 to 4 mm.

7. The device as claimed in claim 1, wherein the glass-ceramic plate is of lithium aluminosilicate type, the chemical composition of which comprises the following constituents in the limits defined below expressed as percentages by weight:
| | |
|---|---|
| SiO₂ | 52 - 75% |
| Al₂O₃ | 18 - 27% |
| Li₂O | 2.5 - 5.5% |
| K₂O | 0 - 3% |
| Na₂O | 0 - 3% |
| ZnO | 0 - 3.5% |
| MgO | 0 - 3% |
| CaO | 0 - 2.5% |
| BaO | 0 - 3.5% |
| SrO | 0 - 2% |
| TiO₂ | 1.2 - 5.5% |
| ZrO₂ | 0 - 3% |
| P₂O₅ | 0 - 8%. |

8. The device as claimed in the preceding claim, wherein the glass-ceramic colored using vanadium oxide has a weight content of vanadium oxide, expressed in the form V₂O₅, from 0.01 to 0.1%.

9. The device as claimed in one of the preceding claims, wherein the masking means is a coating deposited on and/or under the plate, said coating having the ability to absorb and/or reflect and/or scatter the light radiation.

10. The device as claimed in the preceding claim, wherein the coating is an organic-based layer, such as a layer of paint or of lacquer, or a mineral-based layer, such as an enamel or a metallic or metal oxide, nitride, oxynitride or oxycarbide layer.

11. The device as claimed in one of claims 1 to 8, wherein the masking means, positioned under the plate and which may or may not be firmly attached to said plate, is constituted of a material having the ability to absorb and/or scatter the light radiation.

12. The device as claimed in one of claims 1 to 8, wherein the masking means is constituted by heterogeneities located within the plate or on the lower surface thereof, especially texturings, said heterogeneities being capable of deforming the images by light radiation scattering or refraction phenomena.

13. A glass-ceramic plate colored using vanadium oxide for a cooking device, said plate having awight content of vanadium oxide, expressed as V₂O₅, from 0.01 to 0.2% and a thickness from 2 to 6 mm intrinsically having a light transmission ranging from 2.5% to 40% and an optical transmission of at least 0.6% for at least one wavelength within the region ranging from 420 to 480 nm, said plate being coated on at least one of its faces with a coating having the ability to absorb and/or reflect and/or scatter the light radiation.

14. The plate as claimed in the preceding claim, wherein the coating is an organic-based layer, such as a layer of paint or of lacquer, or a mineral-based layer, such as an enamel or a metallic or metal oxide, nitride, oxynitride or oxycarbide layer.
